## Europäisches Patentamt
## European Patent Office
## Office européen des brevets

(19)

(11) Numéro de publication: **0 222 723**
**B1**

(12)

# FASCICULE DE BREVET EUROPEEN

(45) Date de publication du fascicule du brevet:
**16.08.89**

(51) Int. Cl.⁴: **A61C 15/04**

(21) Numéro de dépôt: **86870140.0**

(22) Date de dépôt: **02.10.86**

(54) **Porte-fil dentaire.**

(30) Priorité: **02.10.85 BE 903358**

(43) Date de publication de la demande:
**20.05.87 Bulletin 87/21**

(45) Mention de la délivrance du brevet:
**16.08.89 Bulletin 89/33**

(84) Etats contractants désignés:
**AT CH DE ES FR GB IT LI NL SE**

(56) Documents cités:
**GB-A- 525 528**
**US-A- 1 623 231**
**US-A- 2 650 598**

(73) Titulaire: **Badoux, Gui, 232 Chée d'Alsemberg,
B-1180 Bruxelles(BE)**

(72) Inventeur: **Badoux, Gui, 232 Chée d'Alsemberg,
B-1180 Bruxelles(BE)**

ACTORUM AG

## Description

L'invention concerne un ustensile pour améliorer le nettoyage des espaces interdentaires au moyen d'un fil dentaire comme défini dans la première partie de la revendication 1.

Des ustensiles (que nous appelerons également porte-fils) correspondant au préambule de la revendication 1 ont été utilisés publiquement et sont produits aux U.S.A. Il y a les marques "FLOSSAID", "FLOSSMATE" produit par John O. Butler Co. de Chicago et "E-Z FLOSS" (sous le Design Patent n° 216,545) produit par "E-Z FLOSS" de Palm Springs. Les deux premiers appareils se chargent de la même façon: Une tête en forme de bouton est disposée sur les manches de ceux-ci. Le début du fil doit être enroulé de quelques tours autour de cette tête puis il faut l'installer dans un sillon courant le long de la première branche; le fil quitte cette branche en l'extrémité de celle-ci pour rejoindre l'extrémité de l'autre branche; à nouveau le fil doit suivre un sillon le long de cette dernière branche jusqu'au bouton du départ autour duquel il doit être finalement enroulé de quelques tours.

Le porte-fil "E-Z FLOSS" se distingue des deux premiers par le fait que son manche comporte deux têtes: l'une sert au bobinage du début du fil, l'autre, au bobinage de l'extrémité du fil; de plus ce manche comporte en son extrémité une fente exigüe et le fil se fixe en combinant des bobinages autour des têtes avec des insertions dans cette fente.

Avec les trois appareils, la tension dans le fil est obtenue en maintenant les branches rapprochées pendant son installation.

Ces porte-fils nécessitent à chaque utilisation une grande longueur de fil, dont seulement une petite partie est réellement destinée à passer entre les dents. De plus le fait qu'une grande longueur de fil est sous tension fait que ce fil s'allonge fort (l'élongation par déformation est répartie sur cette longueur) et donc se détend. De plus il est difficile de juger à quelle distance il faut maintenir les branches l'une de l'autre pendant l'installation du fil. En effet il faut maintenir les branches suffisamment rapprochées pour que par la suite le fil soit bien tendu, mais il ne faut pas trop les rapprochées, sinon les dents de l'utilisateur seront à l'étroit entre les branches lors de l'utilisation. Enfin avec les deux premiers porte-fils, le fil sort parfois de son sillon et se détache des extrémités des branches.

D'autres types de porte-fils dentaires correspondant également au préambule de la revendication 1 ont été décrits dans les brevets américains n° 1,623,231, n° 2,650,598, n° 3,871,393 et n° 3,393,687 et britannique n° 525,528. Ces brevets ne dévoilent pas, de manière directe ou indirecte, la structure ou les avantages de la structure de la présente invention.

La présente invention a pour but de remédier à ces inconvénients: Obtenir un porte-fil consommant peu de fil, dont les branches ne peuvent être rapprochées en deçà d'un certain seuil correspondant à un écart idéal et dont le fil est indétachable des extrémités des branches et reste tendu en permanence, ceci avec un mode de fixation simple.

L'avantage obtenu grâce à cette invention est de disposer d'un porte-fil permettant de nettoyer efficacement les espaces interdentaires car d'une part la distance entre les branches après installation du fil est idéale, et d'autre part le fil reste tendu et est solidement maintenu, quelles que soient les positions d'utilisation. Ce porte-fil permet aussi de diminuer la consommation de fil. De plus, son chargement est simple.

Nous allons maintenant décrire un porte-fil dentaire en conformité avec l'invention. Ce porte-fil comprend un manche allongé et une paire de branches recourbées. Chaque branche est reliée par une de ses extrémités au manche. L'autre extrémité de chaque branche est libre et recourbée, de manière à ressortir du plan du manche. Les branches sont flexibles, afin de pouvoir être rapprochées l'une de l'autre. Des excroissances sont disposées sur la surface interne d'au moins une des branches afin de limiter ce rapprochement. De préférence, une excroissance sera disposée sur chaque branche. Lors du mouvement des branches l'une vers l'autre, les excroissances entreront éventuellement en contact et limiteront le rapprochement. Un fil dentaire est prévu, ayant un segment tendu entre les branches, et fixé à celles-ci, à proximité des extrémités libres. Les fixations, situées à proximité des extrémités libres, comportent des moyens pinçants, destinés à maintenir le fil en place. Ces moyens pinçants, dans le mode choisi pour réaliser l'invention, comprennent une fente séparant chaque branche en deux parties à partir de son extrémité libre et en direction de l'autre extrémité (c'est-à-dire celle rattachée au manche) sur une longueur suffisante pour former des mâchoires flexibles de chaque côté de la fente. De plus chaque branche est munie d'une rainure qui court à la périphérie de la branche, sur les parties séparées par la fente, à proximité de son extrémité libre. Un segment du fil est disposé dans la fente et un bobinage du fil dentaire, relié au segment disposé dans la fente, est prévu dans la rainure, pour assurer la fixation du fil dentaire à l'extrémité libre de chaque branche.

Egalement dans le mode choisi pour réaliser l'invention, chaque fente est disposée suivant un angle à peu près perpendiculaire au segment de fil dentaire tendu entre les branches. Les mâchoires sont disposées de préférence l'une en face de l'autre à l'extrémité libre de la branche et les bords de la fente adjacents à l'extrémité libre ont été taillés en forme de triangle. Enfin, les surfaces internes des mâchoires et des rainures présentent un léger relief de manière à améliorer l'adhérence du fil sur ces surfaces et son maintien dans les mâchoires.

La fente prévue dans chaque branche a une longueur suffisante pour que la moindre pression appliquée sur les deux mâchoires provoque leur fermeture sur le fil. Dans la structure choisie, la rainure se trouve à environ 3 mm de l'extrémité de chaque branche. La structure a des dimensions telles que la longueur de fil nécessaire est d'environ 12 cm.

Pendant qu'il charge l'appareil, l'utilisateur maintient les branches suffisamment rapprochées pour que les excroissances dont sont munies les branches soient en contact. Lorsqu'il les relâche, les branches tendent à retrouver leur écartement normal; elles exercent alors une traction sur le fil et resserrent les enroulements du fil dans les rainures aux extrémités des branches. Ceci, à son tour, ferme les fentes sur le fil, ce qui le maintient solidement en place. Cet effet de fermeture est accru par les contraintes subies par le fil lors du nettoyage des espaces interdentaires.

D'autres avantages de l'invention apparaîtront plus clairement dans la description détaillée et les dessins.

Les dessins représentent seulement un mode d'exécution de l'invention.

La figure 1 représente, en perspective, un porte-fil réalisé conformément à la présente invention.

La figure 2 représente, en perspective, une vue aggrandie d'une portion du porte-fil représenté à la figure 1.

La figure 3 représente, en perspective, la même portion de porte-fil que celle représentée par la figure 2, mais en partie sectionnée

Les figures 4 à 7 illustrent la succession des étapes utilisées pour charger le fil sur le porte-fil.

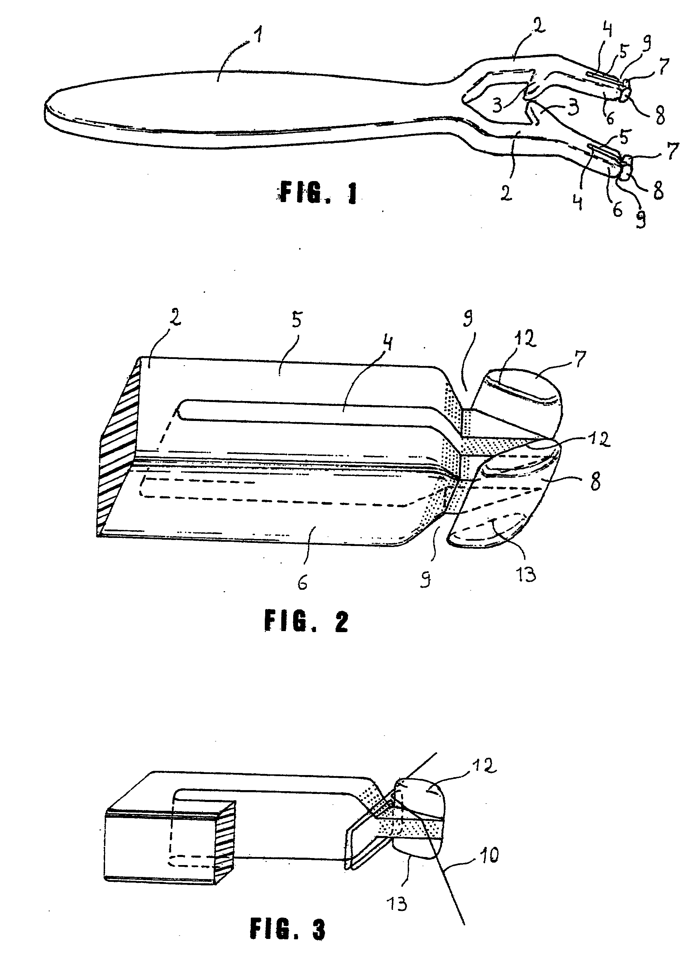

Comme représenté dans la figure 1, un porte-fil dentaire réalisé conformément à l'invention est un appareil fourchu constitué d'un manche allongé 1 et de deux branches 2 rattachées de manière flexible au manche. Ces branches sont recourbées et munies des excroissances 3. Chaque branche 2 est fendue en son milieu par la fente 4, à partir de son extrémité libre et sur une longueur suffisante pour former une pince, c'est-à-dire que la moindre pression appliquée sur les parties 5 et 6 à proximité de l'extrémité libre de la branche provoquera la mise en contact de ces parties. Dand la réalisation choisie pour l'invention, chaque branche fendue est proportionnée pour former une pince d'environ 12 mm de long et pour que les extrémités 7 et 8 de la branche, longues d'environ 3 mm, constituent les mâchoires de la pince. Chaque pince est munie d'une rainure 9 qui court latéralement par rapport à la fente 4, à la périphérie de chaque branche et à environ 3 mm de son extrémité libre.

Les figures 2 et 3 représentent une vue aggrandie de l'extrémité libre d'une branche.

La figure 3 représente la manière dont le fil est disposé à l'extrémité de la branche.

Pour charger l'appareil, l'utilisateur a besoin grosso modo de 12 cm de fil dentaire. Cette longueur peut être mesurée par des repères sur le manche de l'appareil ou des repères colorés sur le fil lui-même.

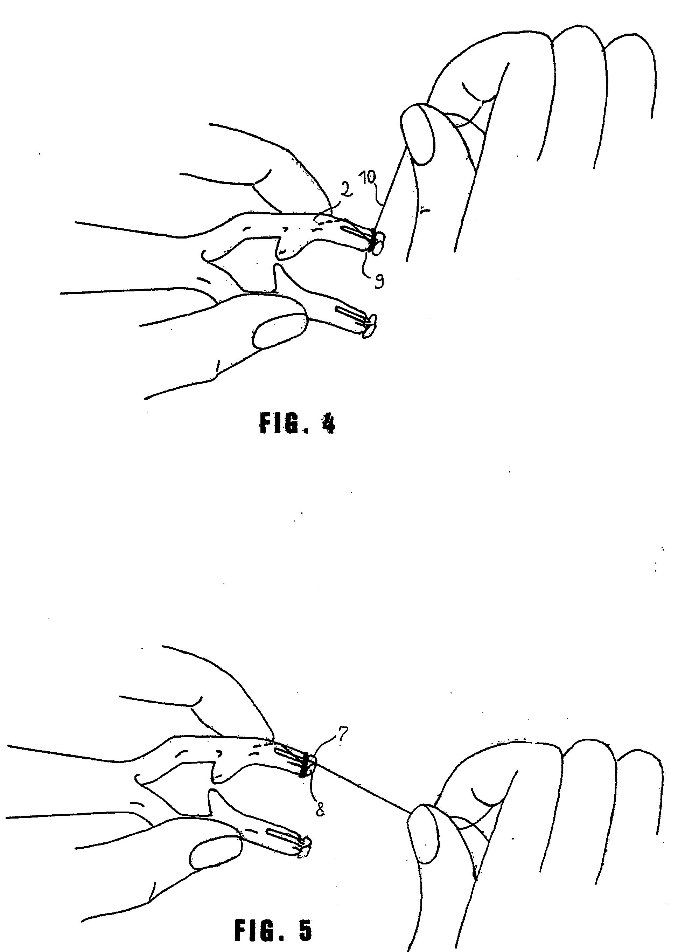

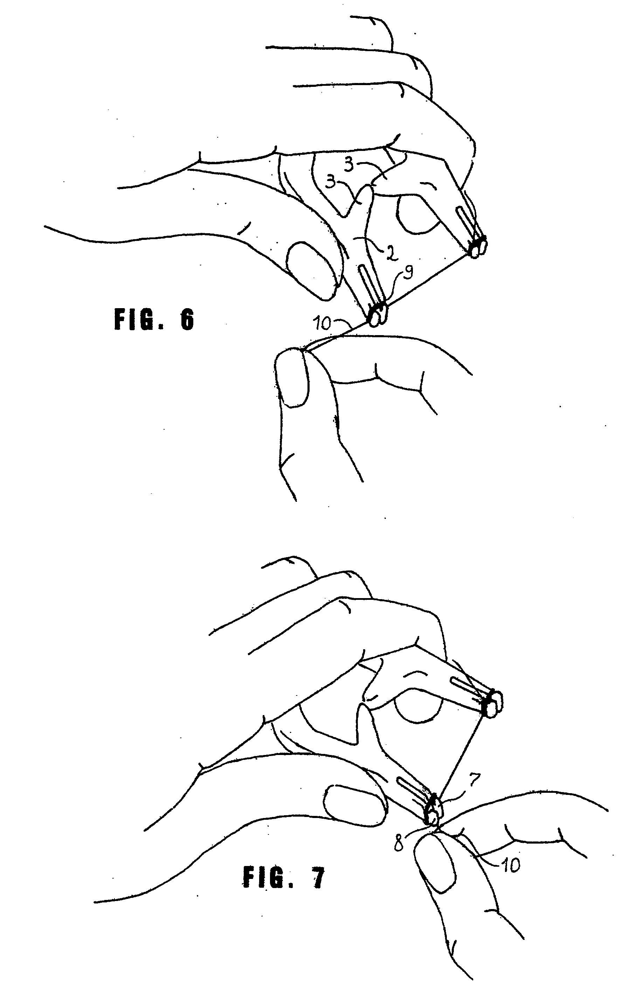

Comme représenté à la figure 4, l'utilisateur enroule envirron trois fois, le début de fil 10 dans la rainure 9 à l'extrémité de la branche 2. Ensuite, il insère le fil dans la fente entre les mâchoires 7 et 8 (voir figure 5). Comme représenté à la figure 6, pendant qu'il maintient les branches rapprochées, les excroissances 3 étant en contact, l'utilisateur bobine le fil trois fois dans la rainure 9 à l'extrémité de la deuxième branche. Avant de relâcher les branches, comme indiqué à la figure 7, l'utilisateur glisse l'extrémité du fil entre les mâchoires 7 et 8 de la deuxième branche.

Chaque couple de demi-branches 5 et 6 est auto-bloquant. Lorsque l'utilisateur relâche les branches, après avoir chargé l'appareil comme décrit ci-dessus, les branches tendent à retrouver leur écartement normal et donc tendent le fil, ce qui resserre les enroulements dans les rainures 9 et donc ferme les mâchoires 7 et 8 de chaque branche sur le fil. Toute contrainte subie par le fil pendant le nettoyage des espaces interdentaires augmentera le pincement de ces mâchoires.

La fente dans chaque branche est approximativement perpendiculaire au fil tendu entre les branches. Le fil est ainsi pincé suivant un plan approximativement perpendiculaire aux tensions, ce qui améliore la prise sur celui-ci. De plus, les mouvements des mâchoires 7 et 8 ont ainsi lieu suivant une direction sensiblement parallèle aux tensions, ceci ayant pour effet que les contraintes subies par le fil assurent mieux l'effet de pincement. Enfin, le fil est ainsi maintenu en place dans les mâchoires par la rainure 9 qui est à angle droit par rapport à la fente.

Pour insérer le fil entre les mâchoires 7 et 8, l'utilisateur doit tirer le fil suivant une direction perpendiculaire au plan des enroulements dans la rainure 9. Les côtés 12 et 13 des mâchoires 7 et 8 sont taillés suivant une forme triangulaire par rapport à la fente, de manière à ce que le fil glisse facilement entre les mâchoires 7 et 8 après avoir été bobiné dans la rainure 9. L'adhérence du fil peut être augmentée en rendant rugueuses les surfaces internes des mâchoires 7 et 8 et de la rainure 9. Ces surfaces peuvent par exemple, être couvertes de petits grains comme représenté dans les figures 2 et 3.

## Revendications

1. Ustensile pour améliorer le nettoyage des espaces interdentaires au moyen d'un fil dentaire, comprenant un manche allongé (1) et une paire de branches (2) opposées et recourbées qui ressortent du plan du manche, chaque branche (2) ayant une première extrémité attachée au manche et ayant l'autre extrémité libre, ces branches étant flexibles pour pouvoir être rapprochées l'une de l'autre, des moyens pinçants étant réalisés en fendant chaque branche en deux parties (5, 6) par une fente (4) s'étendant à partir de l'extrémité libre en direction du manche, et un fil dentaire (10) ayant une première partie disposée d'une branche à l'autre à proximité de leurs extrémités libres, et une deuxième partie reliée à la première partie et utilisée pour la fixation de celle-ci, caractérisé en ce que des moyens excroissants (3) sont montés sur au moins une des branches pour limiter le rapprochement pouvant être imposé à celles-ci, et en ce que la fente (4) s'étend en directions du manche, au-delà de l'endroit de fixation du fil à la branche et sur une longueur suffisante pour former, par la flexibilité des parties (5 et 6) situées de part et d'autre de la fente (4), les moyens pinçants destinés à maintenir fermement le fil en place par un pincement croissant avec l'augmentation des efforts auxquelles le fil est soumis.

2. Ustensile selon la revendication 1, caractérisé en ce que la fente (4) se trouve dans un plan approximativement perpendiculaire à la partie du fil dentaire tendu entre les branches, en ce que une rainure (9) court à la périphérie de chaque branche, sur les parties (5 et 6) situées de part et d'autre de la fente (4), à proximité de l'extrémité libre de la branche, et en ce que la deuxième partie du fil dentaire servant à la fixation de la partie de fil s'étendant d'un branche à l'autre comprend un bobinage dans la rainure périphérique (9) et un segment entre les parties pinçantes (7 et 8).

3. Ustensile selon la revendication 2, caractérisé en ce que les portions pinçantes (7 et 8) sont situées à l'extrémité de la branche et leurs bords (12 et 13) adjacents à cette extrémité sont taillés suivant une forme triangulaire de telle sorte que la distance entre ces bords soit plus grande près de la rainure (9) et plus petite près de l'extrémité de la branche.

4. Ustensile selon la revendication 2, caractérisé en ce que les surfaces des portions pinçantes (7 et 8), qui entrent en contact, et les parois des rainures (9) sont rugueuses pour améliorer l'adhérence du fil sur ces surfaces.

**Patentansprüche**

1. Vorrichtung zur besseren Reinigung der Zahnzwischenräume mit Zahnseide, bestehend aus einem länglichen Griff (1) und zwei gegenüberliegenden und von der Ebene des Griffs aus hochgebogenen Gabelarmen (2), wobei jeder dieser Arme (2) an einem Ende am Griff befestigt und am anderen frei ist, damit sie einander angenähert werden können, und über Kneifteile verfügt, die durch Einschneiden der Gabelarme in zwei Teile (5 und 6) entstehen, wobei dieser Einschnitt (4) vom freien Ende des Gabelarms aus in Richtung Griff verläuft und wobei ein Stück Zahnseide zwischen die freien Gabelenden gespannt wird und das restliche Stück zur Befestigung des ersten Stücks Zahnseide benutzt wird, dadurch gekennzeichnet, daß auf mindestens einem Gabelarm Ausbuchtungen (3) angebracht sind, welche die größtmögliche Annäherung der Gabeln zueinander begrenzen, sowie dadurch, daß der Einschnitt (4) in Richtung Griff verläuft über die Befestigungsstelle der Zahnseide an den Gabelarmen hinaus und lang genug ist, um aufgrund der Biegsamkeit der zu beiden Seiten des Einschnitts (4) befindlichen Teile (5 und 6) Kneifvorrichtungen zu bilden, damit mit steigendem Druck auf die Zahnseide die Kneifwirkung stärker wird und dadurch die Zahnseide fest an ihrem Platz gehalten wird.

2. Vorrichtung nach Anspruch 1, dadurch gekennzeichnet, daß sich der Einschnitt (4) ungefähr senkrecht zu der zwischen den Gabelenden gespannten Zahnseide befindet, dadurch, daß am Endstück der beiden Gabeln je eine Rille an den Teilen (5 und 6) zu beiden Seiten des Einschnitts (4) kurz vor dem freien Ende des Gabelarms verläuft und dadurch, daß das restliche Stück Zahnseide zur Befestigung des zwischen beiden Gabeln gespannten Stücks, erst entlang der Rille (9) am Gabelende gewickelt und dann zwischen die Kneifteile (7 und 8) geführt wird.

3. Vorrichtung nach Anspruch 2, dadurch gekennzeichnet, daß die Kneifteile (7 und 8) sich am Ende der Gabelarme befinden und daß deren am äußeren Rand befindliche Einschnittränder in Form eines Dreiecks eingeschnitten sind, derart, daß die Entfernung zwischen diesen Rändern an der Rille größer und am Ende der Gabelarme kleiner ist.

4. Vorrichtung nach Anspruch 2, dadurch gekennzeichnet, daß die sich berührenden Oberflächen der Kneifteile (7 und 8) und die Wände der Rillen angerauht sind, um an diesen Oberflächen der Zahnseide mehr Halt zu geben.

**Claims**

1. Device for improved cleaning of interdental spaces with a dental thread, composed of an elongated handle (1) and a pair of opposed curved prongs (2) in offset from the plane of the handle, each prong (2) having a first end mounted to the handle and having the second end free, these prongs being flexible for movement towards each other, gripping means being realized by a slit (4) dividing each end of prong into two parts (5, 6) and extending lengthwise from the free end of the prong towards the first end, and a dental thread (10) having a first part being extended between the prongs, near the free ends, and a second part utilized to fix the first one, characterized in that protrusion means (3) are mounted on at least one of the prongs to limit the movement towards each other, and in that the slit (4) extend lengthwise towards the handle, beyond the place where the thread is gripped on the prong, over a length sufficient to form, by the flexibility of each part (5 and 6) situated on opposite sides of the slit (4), the gripping means that will maintain the thread firmly in place by a increased gripping effect, enhanced by the pressure on the thread during use.

2. Device according to claim 1, characterized in that the slit (4) is in a plane approximately perpendicular to the part of the thread extended between the prongs, in that a groove (9) extends around the periphery of each prong, on the two parts (5 and 6) forming each side of the slit (4), in proximity to the free end of the prong, and in that the second part of the dental thread used to fix the part of thread extended between the prongs, comprises a winding in the peripheral groove (9) and a segment between the jaws (7 and 8).

3. Device according to claim 2, characterized in that the jaws (7 and 8) are situated at the free end of the prong and the edges (12 and 13) adjacent the free end are triangularly tapered, so that the distance between these edges decreases from the groove (9) to the end of the prong.

4. Device according to claim 2, characterized in that the surface areas of the jaws (7 and 8) that will grip the thread, and the surface areas of the grooves (9) are rough surface areas, whereby the adhesion of the thread to these surface areas is improved.

**FIG. 1**

**FIG. 2**

**FIG. 3**

**FIG. 4**

**FIG. 5**

FIG. 6

FIG. 7